# EUROPÄISCHE PATENTSCHRIFT

(11) **EP 1 058 685 B1**
(45) Veröffentlichungstag und Bekanntmachung des Hinweises auf die Patenterteilung: **28.05.2003**
(21) Anmeldenummer: 99908893.3
(22) Anmeldetag: 13.02.1999
(51) Int. Cl.: C07F 5/02, C07F 9/6568, C08F 10/00

(54) **IONISCH AUFGEBAUTE VERBINDUNGEN ALS OLEFINPOLYMERISATIONSKATALYSATORKOMPONENTE**
COMPOUNDS HAVING AN IONIC STRUCTURE USED AS CONSTITUENT OF AN OLEFIN POLYMERISATION CATALYST
COMPOSES A STRUCTURE IONIQUE SERVANT DE CONSTITUANT DE CATALYSEUR POUR LA POLYMERISATION D'OLEFINES

(30) Priorität: 27.02.1998 DE 19808254
(43) Veröffentlichungstag der Anmeldung: 13.12.2000
(73) Patentinhaber: Basell Polyolefine GmbH, 67056 Ludwigshafen (DE)
(72) Erfinder: BOHNEN, Hans, D-47441 Moers (DE); FRITZE, Cornelia, D-60529 Frankfurt (DE); KÜBER, Frank, D-61440 Oberursel (DE)
(74) Vertreter: Colucci, Giuseppe
(86) Internationale Anmeldenummer: EP9900957
(87) Internationale Veröffentlichungsnummer: WO99043685

(56) Entgegenhaltungen:
- US-A- 4 224 256
- US-A- 4 898 802
- CHEMICAL ABSTRACTS, vol. 101, no. 25, 17. Dezember 1984 Columbus, Ohio, US; abstract no. 229850, SCHIEMENZ, GUNTER P. ET AL: "Ions. 13. Understanding the concepts enantiomer and enantiotope" XP002105323 & CHEM. SCR. (1984), 23(5), 216-23 CODEN: CSRPB9;ISSN: 0004-2056,1984,
- EISCH, JOHN J. ET AL: "Rearrangements of organometallic compounds. XII. Generation of boracarbenoid and boracyclopropene intermediates from the photolysis of tetraorganoborate salts in aprotic media" J. AM. CHEM. SOC. (1975), 97(4), 895-7 CODEN: JACSAT,1975, XP002105317
- EISCH, JOHN J. ET AL: "Rearrangements of organometallic compounds. XI. Duality of mechanism fo 1,2-aryl migrations in the oxidation of tetraarylborate salts" J. ORGANOMETAL. CHEM. (1974), 71(2), C21-C24 CODEN: JORCAI,1974, XP002105318
- CHEMICAL ABSTRACTS, vol. 77, no. 4, 24. Juli 1972 Columbus, Ohio, US; abstract no. 27134, SHAIN, ALBERT L.: "Dynamics of intramolecular triplet exciton transfer using electron spin resonance" XP002105324 & J. CHEM. PHYS. (1972), 56(12), 6201-12 CODEN: JCPSA6,1972,
- CHEMICAL ABSTRACTS, vol. 71, no. 25, 22. Dezember 1969 Columbus, Ohio, US; abstract no. 123312, SHAIN, ALBERT L. ET AL: "Intramolecular triplet exciton transfer in some noncoplanar aromatic systems" XP002105325 & CHEM. PHYS. LETT. (1969), 3(7), 550-1 CODEN: CHPLBC,1969,
- HELLWINKEL, DIETER ET AL: "Stereochemistry of organic derivatives of penta- and hexavalent arsenic. Tris[2,2'-biphenylylene]arsenate anion and bis[2,2'-biphenylylene]-2- biphenylylarsenic" JUSTUS LIEBIGS ANN. CHEM. (1967), 705, 66-75 CODEN: JLACBF,1967, XP002105319
- HELLWINKEL, DIETER: "Stereochemistry of organic derivatives of penta- and hexavalent phosphorus. III. Tris(4,4'-dimethylbiphenylylene)-phosphate and bis(4,4'-dimethylbiphenylylene)(4,4'-dimet hyl-2-biphenylyl)phosphorane" CHEM. BER. (1966), 99(11), 3660-7 CODEN: CHBEAM,1966, XP002105320
- HELLWINKEL, DIETER: "Stereochemistry of organic derivatives of penta- and hexavalent phosphorus. II. First optically active pentaarylphosphorane" CHEM. BER. (1966), 99(11), 3642-59 CODEN: CHBEAM,1966, XP002105321
- CHEMICAL ABSTRACTS, vol. 59, no. 7, 30. September 1963 Columbus, Ohio, US; abstract no. 7547g, NESMEYANOV, A.N. ET AL.: "CYCLOPENTADIENYLETHOXYTITANOBIS(8-HYDROXY QUINOLATE)" XP002105326 & IZV. AKAD. NAUK SSSR, OTD. KHIM. NAUK, 1963, Seiten 831-835,
- CHEMICAL ABSTRACTS, vol. 58, no. 3, 4. Februar 1963 Columbus, Ohio, US; abstract no. 2469h, WITTIG, G. ET AL.: "SYNTHESIS OF (BISPHENYLENE)ARYLARSORANES FROM SPIROBISPHENYLARSONIUM SALTS" XP002105327 & ANGEW. CHEM., Bd. 74, 1962, Seite 782
- WITTIG, G. ET AL.: "ZUR REAKTIONSWEISE AROMATISCHER SPIROPHOSPHANE" CHEM.BER., Bd. 97, 1964, Seiten 747-768, XP002105322

## Beschreibung

Die vorliegende Erfindung umfaßt chemische Verbindungen, die ionisch aufgebaut sind und in Kombination mit einer Organometallübergangsverbindung ein Katalysatorsystem bilden, welches vorteilhaft zur Polymerisation von Olefinen eingesetzt werden wird.

Ziegler Typ Katalysatoren auf der Basis gewinkelter Metallocene mit Metallen der Gruppe 4 bilden eine neue Generation industriell einsetzbarer Katalysatoren zur Polymerisation von α-Olefinen (H.H. Brintzinger, D. Fischer, R. Mülhaupt, R. Rieger, R. Waymouth, Angew. Chem. 1995, 107, 1255-1283).
Um ein aktives Katalysatorsystem zu erhalten, wird der Metallocenkomplex mit einem großen Überschuß an Methylaluminiumoxan (MAO) behandelt (H. Sinn, W. Kaminsky, Adv. Organomet. Chem., 1980, 18, 99). Dies hat neben den hohen Co-Katalysatorkosten den Nachteil eines hohen Aluminiumanteils im erhaltenen Polymer. Deshalb wurden neue Aktivierungsmethoden, die ohne überstöchiometrische Menge an Aktivator auskommen, entwickelt .
Die Synthese von "Kationen-ähnlichen" Metallocen-Polymerisationskatalysatoren, wird im J. Am. Chem. Soc. 1991, 113, 3623 beschrieben. Darin erfolgt die Alkylabstraktion von einer Metallocenalkylverbindung mittels
Trispentafluorphenylboran, die stöchiometrisch zum Metallocen eingesetzt wird.

In EP-A-0,427,697 wird dieses Syntheseprinzip und ein entsprechendes Katalysatorsystem, bestehend aus einer neutralen Metallocenspezies (z.B. Cp₂ZrMe₂), einer Lewis-Säure (z.B. B(C₆F₅)₃) und Aluminiumalkylen beansprucht. Ein Verfahren zur Herstellung von Salzen der allgemeinen Form LMX⁺ XA⁻ nach dem oben beschriebenen Prinzip wird in EP-A-0,520,732 beansprucht.

EP-A-0,558,158 beschreibt zwitterionische Katalysatorsysteme, die aus Metallocendialkyl-Verbindungen und Salzen der Form [R₃NH]⁺[BPh₄]⁻ dargestellt werden. Die Umsetzung eines solchen Salzes mit z.B. Cp₂*ZrMe₂ liefert durch Protolyse unter Methanabspaltung intermediär ein Zirkonocenmethyl-Kation. Dieses reagiert über C-H-Aktivierung zum Zwitterion Cp₂*Zr⁺-(m-C₆H₄)-BPh₃⁻ ab. Das Zr-Atom ist dabei kovalent an ein Kohlenstoffatom des Phenylringes gebunden und wird über eine agostische Wasserstoffbindung stabilisiert.

In US-A-5,384,299 werden entsprechende Systeme beansprucht, wobei Dimethylaniliniumsalze mit perfluorierten Tetraphenylboraten verwendet werden. Neben der aktivierenden Wirkung der Borat-Salze übt ihre Ligandensphäre eine wichtige Funktion auf das Reaktionsgleichgewicht aus. Große sperrige Liganden verhindern weitgehend die Dimerisierung der Metalloceniumfragmente und drängen somit die Gleichgewichtslage auf die Seite der katalytisch aktiven Spezies. Die bislang beschriebenen einkemigen Borat-Anionen sind durch vier Aryl-Liganden charakterisiert, und können durch den Einbau von sperrigen Gruppen am Liganden Einfluß auf das Reaktionsgleichgewicht nehmen (WO 95/24268). Nachteile dieser Systeme sind die aufwendigen Synthesen, sowie die extreme Empfindlichkeit der resultierenden Metallocenium-Komplexe.

Verbindungen mit einem oder mehreren Biphenyl Resten sind aus den folgenden Dokumenten bekannt: *J. Am. Chem. Soc*., 97(4), 895-897 (1975), *Chemical Abstracts* no. 123312b, vol. 71, no. 25, 22. Dezember 1969, *Liebigs Ann.* Chem., 705, 66-75 (1967), *Chem. Ber*., 99(11), 3642-3659 (1966), *Chem. Ber*., 99(11), 3660-3667 (1966), US 4,898,802 und US 4,224,256. Die Biphenylverbindungen, die unsubstituiert oder nicht in sämtlichen Positionen substituiert sind, wurden nicht in der Polymerisation von Olefinen verwendet.

Die Aufgabe bestand darin eine chemische Verbindung bereitszustellen, welche ein neues Liganden-System besitzt, das die Vorteile sperriger Liganden beinhaltet, jedoch die Nachteile der bestehenden sperrigen Aryl-Liganden ausschließt.

Die vorliegende Erfindung betrifft eine chemische Verbindung der Formel I,

[BQ¹Q²]⁻ A⁺ (I)

worin
- A: ein Kation der Gruppe la, IIa, IIIa des Periodensystems der Elemente, ein Carbenium-, Oxonium-, Phosphonium oder Sulfonium-Kation oder eine quatäre Ammonium-Verbindung ist,
- Q¹ und Q²: können gleich oder verschieden sein und sind ein Liganden-System, das ausgehend von einem Biphenyl-Grundgerüst über die Positionen 2 und 12 an B gebunden ist und der allgemeinen Formel (II) 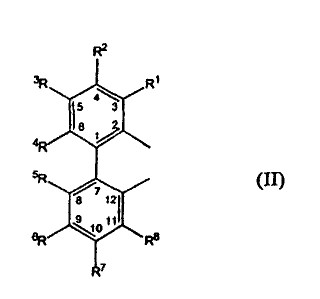
worin
R¹, R², R³, R⁴, R⁵, R⁶, R⁷ und R⁸ gleich oder verschieden sind und ein Halogenatom, eine C₁-C₄₀-kohlenstoffhaltige Gruppe wie C₁-C₂₀-Alkyl, C₁-C₂₀-Halogenalkyl, C₁-C₁₀-Alkoxy, C₆-C₄₀-Aryl, C₆-C₄₀-Halogenaryl, C₆-C₄₀-Aryloxy, C₇-C₄₀-Arylalkyl, C₇-C₄₀-Halogenarylalkyl, C₇-C₄₀-Halogenalkylaryl sind oder eine OSiR₃⁹-Gruppe sind, worin R⁹ gleich oder verschieden sind, ein Wasserstoffatom, ein Halogenatom, eine C₁-C₄₀-kohlenstoffhaltige Gruppe wie C₁-C₂₀-Alkyl, C₁-C₂₀-Halogenalkyl, C₁-C₁₀-Alkoxy, C₆-C₄₀-Aryl, C₆-C₄₀-Halogenaryl, C₆-C₄₀-Aryloxy, C₇-C₄₀-Arylalkyl, C₇-C₄₀-Halogenarylalkyl, C₇-C₄₀-Halogenalkylaryl sind. Außerdem können zwei oder mehrere Reste R¹ bis R⁸ so miteinander verbunden sein, daß sie ein mono- oder polycyclisches Ringsystem bilden, welches seinerseits wiederum substituiert sein kann.

Außerdem betrifft die vorliegende Erfindung eine chemische Verbindung der Formel III.

[PQ¹Q²Q³]⁻ A⁺ (III)

worin
- A: ein Kation der Gruppe la, lla, IIIa des Periodensystems der Elemente, ein Carbenium-, Oxonium-, Phosphonium oder Sulfonium-Kation oder eine quatäre Ammonium-Verbindung ist,
- Q¹, Q², Q³: gleich oder verschieden sind und ein Liganden-System, das ausgehend von einem Biphenyl-Grundgerüst über die Positionen 2 und 12 an P gebunden ist bedeutet, wobei Q die gleiche Bedeutung wie bei der allgemeinen Formel (II) hat.

Besonders bevorzugte aber nicht limitierende Bespiele für die erfindungsgemäße chemische Verbindung der Formeln (I) und (III) sind:

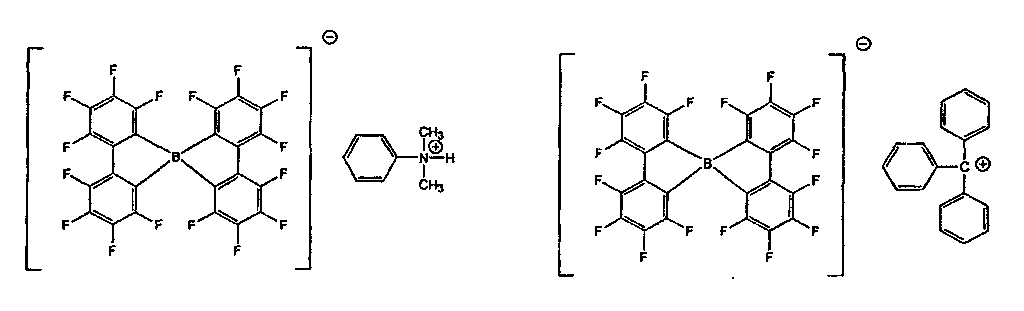

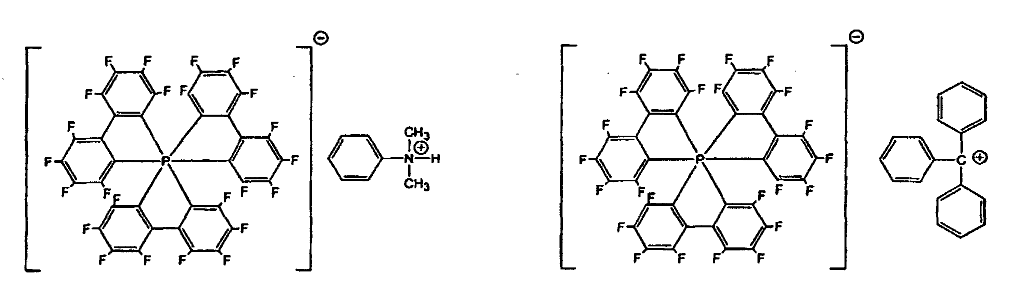

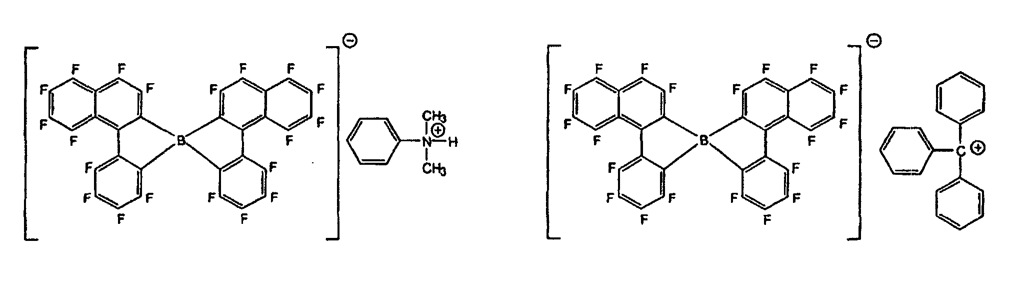

Die Herstellung einer erfindungsgemäßen chemischen Verbindung der Formel (I) und (III) kann z.B. nach folgendem Reaktionsschema ablaufen, 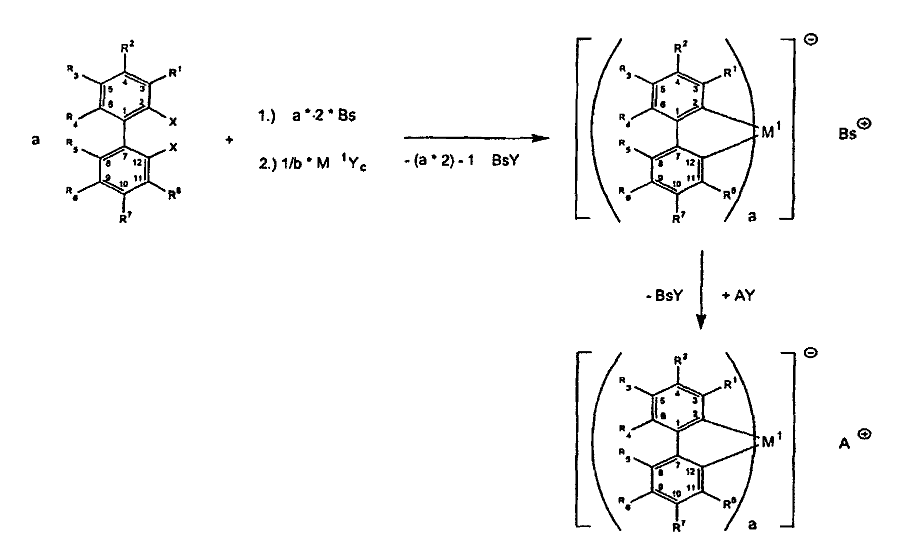 worin
- Bs: eine Base, bevorzugt ein Element der Gruppen la und IIa des Periodensystems der Elemente oder eine Organolithium-Verbindung oder eine Grignard-Verbindung ist,
- X: unabhängig voneinander gleich oder verschieden eine Abgangsgruppe, bevorzugt Wasserstoff- oder ein Halogen-Atom,
- Y: unabhängig voneinander gleich oder verschieden eine Abgangsgruppe, bevorzugt ein Wasserstoff- oder ein Halogen-Atom,
- M¹: B oder P,

- A: ein Kation der Gruppe la, IIa, IIIa des Periodensystems der Elemente, ein Carbenium-, Oxonium- oder Sulfonium-Kation oder eine quatäre Ammonium-Verbindung,
- a: gleich 2 oder 3,
- b: eine ganze Zahl zwischen 2 und 5 und
- c: eine ganze Zahl zwischen 2 und 5 ist, bedeutet.

Die erfindungsgemäßen Verbindungen können zusammen mit Metallocenen als Katalysatorsysteme in der Polymerisation von Olefinen, insbesondere Homo- oder Copolymeren auf Basis von Ethylen, Propylen oder Norbonadien, sowie funktionalisierten Olefinen verwendet werden.

Die nachfolgenden Beispiele dienen zur Erläuterung der Erfindung

### Beispiel 1: Synthese von 2,2'-Dibrom-octafluoro-biphenyl

10g 1,2-Dibromtetrafluorbenzof (32mmol) werden in 100 ml Diethylether vorgelegt und auf -78°C gekühlt. Es werden 15 ml n-Butyllithium (2,5 M in Hexan) zugetropft und 1 Stunde gerührt. Anschließend wird ein Überschuß an Titantetrachlorid zugegeben und weitere 4 Stunden bei -78°C gerührt. Man läßt die Suspension auf Raumtemperatur erwärmen und rührt 10 Stunden nach. Danach wird mit H₂O hydrolysiert. Die wäßrige Phase wird mehrmals mit Diethylether ausgeschüttelt und anschließend werden die organischen Phasen vereinigt und über Magnesiumsulfat getrocknet. Das Lösemittel wird abgezogen und der verbleibende Rückstand aus einem 1:1 Gemisch aus Diethylether/n-Pentan umkristallisiert. ¹⁹F-NMR CDCl₃: -127.5 ppm (m, 2F, 3,3'-F), -134,6 ppm (m, 2F, 6,6'-F), -149,9 ppm (m, 2F, 4,4'-F), -154,3 ppm (m, 2F, 5,5'-F)

### Beispiel 2: Synthese von N,N-Dimethylanilinium-bis(2,2'-octafluorobiphenyl)borat

4.6 g (10 mmol) 2,2'-Dibrom-octafluoro-biphenyl werden in 30 ml Diethylether vorgelegt und bei -78°C gerührt. Anschließend werden 8 ml n-Butyllithium (2M in Hexan) zugetropft und die Suspension wird 2 Stunden bei -78°C gerührt. Danach werden 5 ml Bortrichlorid (1M in Hexan) zugetropft und die Suspension wird auf Raumtemperatur erwärmt. Das Lösemittel wird im Vakuum abgezogen und der verbleibende Rückstand mit 100 ml Pentan ausgerührt. Anschließend werden 0.79 g N,N Dimethylaniliniumchlorid portionsweise zugegeben und 5 Stunden nachgerührt. Der erhaltene Feststoff wird filtriert und mit 50 ml Methylenchlorid extrahiert. Das erhaltene Filtrat wird im Vakuum eingeengt und der resultierende Feststoff aus einem Methylenchlorid/Pentan-Gemisch (1:1) umkristallisiert.
¹⁹F-NMR CDCl₃: -137.2 ppm (m, 2F, 3,3'-F), -138.4 ppm (m, 2F, 6,6'-F), -159,9 ppm (m, 2F, 4,4'-F), -160.9 ppm (m, 2F, 5,5'-F)

### Beispiel 3: Synthese von Triphenylcarbenium-bis(2,2'-octafluorobiphenyl)borat

4.6 g (10 mmol) 2,2'-Dibrom-octafluoro-biphenyl werden in 30 ml Diethylether vorgelegt und bei -78°C gerührt. Anschließend werden 8 ml n-Butyllithium (2M in Hexan) zugetropft und die Suspension wird 2 Stunden bei -78°C gerührt. Danach werden 5 ml Bortrichlorid (1M in Hexan) zugetropft und die Suspension wird auf Raumtemperatur erwärmt. Das Lösemittel wird im Vakuum abgezogen und der verbleibende Rückstand mit 100 ml Pentan ausgerührt. Anschließend werden 1.39 g Triphenylchlormethan portionsweise zugegeben und 10 Stunden nachgerührt. Der erhaltene Feststoff wird filtriert und mit 70 ml Methylenchlorid extrahiert. Das erhaltene Filtrat wird im Vakuum eingeengt und der resultierende Feststoff aus einem Methylenchlorid/Pentan-Gemisch (1:1) umkristallisiert.
¹⁹F-NMR CDCl₃: -137.4 ppm (m, 2F, 3,3'-F), -138.8 ppm (m, 2F, 6,6'-F), -160.4 ppm (m, 2F, 4,4'-F), -161.3 ppm (m, 2F, 5,5'-F)

### Beispiel 4: Synthese von Triphenylcarbenium -tris(2,2'-octafluorobiphenyl)phosphat

5.93 g (12 mmol) 2,2'-Dibrom-octafluoro-biphenyl werden in 30 ml Diethylether vorgelegt und bei -78°C gerührt. Anschließend werden 9,6 ml n-Butyllithium (2,5 M in Hexan) zugetropft und die Suspension wird 2 Stunden bei -78°C gerührt. Danach werden 0.83g PCl₅, gelöst in 10 ml Et₂O, zugetropft und die Suspension wird auf Raumtemperatur erwärmt. Das Lösemittel wird im Vakuum abgezogen und der verbleibende Rückstand mit 100 ml Pentan ausgerührt. Anschließend werden 1.10 g Triphenylchlormethan portionsweise zugegeben und 10 Stunden nachgerührt. Der erhaltene Feststoff wird filtriert und mit 70 ml Methylenchlorid extrahiert. Das erhaltene Filtrat wird im Vakuum eingeengt und der resultierende Feststoff aus einem Methylenchlorid/Pentan-Gemisch (1:1) umkristallisiert.
¹⁹F-NMR CDCl₃: -133.9 ppm (m, 2F, 3,3'-F), -134.4 ppm (m, 2F, 6,6'-F), -157.4 ppm (m, 2F, 4,4'-F), -158.5 ppm (m, 2F, 5,5'-F)

### Beispiel 5: Synthese von N,N-Dimethylanilinium-tris(2,2'-octafluorobiphenyl)phosphat

5.93 g (12 mmol) 2,2'-Dibrom-octafluoro-biphenyl werden in 30 ml Diethylether vorgelegt und bei -78°C gerührt. Anschließend werden 9,6 ml n-Butyllithium (2,5 M in Hexan) zugetropft und die Suspension wird 2 Stunden bei -78°C gerührt. Danach werden 0.83g PCl₅, gelöst in 10 ml Et₂O, zugetropft und die Suspension wird auf Raumtemperatur erwärmt. Das Lösemittel wird im Vakuum abgezogen und der verbleibende Rückstand mit 100 ml Pentan ausgerührt. Anschließend werden 0.63 g N,N Dimethylaniliniumchlorid portionsweise zugegeben und 5 Stunden nachgerührt.
Der erhaltene Feststoff wird filtriert und mit 70 ml Methylenchlorid extrahiert. Das erhaltene Filtrat wird im Vakuum eingeengt und der resultierende Feststoff aus einem Methylenchlorid/Pentan-Gemisch (1:1) umkristallisiert.
¹⁹F-NMR CDCl₃: -133.1 ppm (m, 2F, 3,3'-F), -133,6 ppm (m, 2F, 6,6'-F), -157.0 ppm (m, 2F, 4,4'-F), -158.1 ppm (m, 2F, 5,5'-F)

## Patentansprüche

1. Verbindung der Formel I,
[BQ¹Q²]⁻ A⁺ (I)
worin
A ein Kation der Gruppe la, IIa, IIIa des Periodensystems der Elemente, ein Carbenium-, Oxonium-, Phosphonium oder Sulfonium-Kation oder eine quatäre Ammonium-Verbindung ist.
Q¹ und Q² gleich oder verschieden sein und sind ein Liganden-System, das ausgehend von einem Biphenyl-Grundgerüst über die Positionen 2 und 12 an B gebunden ist und der allgemeinen Formel (II) 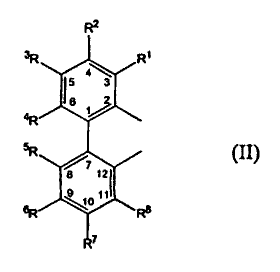
worin
R¹, R², R³, R⁴, R⁵, R⁶, R⁷ und R⁸ gleich oder verschieden sind und ein Halogenatom, eine C₁-C₄₀-kohlenstoffhaltige Gruppe oder eine OSiR₃⁹-Gruppe sind, worin R⁹ gleich oder verschieden sind, ein Wasserstoffatom, ein Halogenatom, eine C₁-C₄₀kohlenstoffhaltige Gruppe sind, oder zwei oder mehrere Reste R¹ bis R⁸ so miteinander verbunden sein kann, daß sie ein mono- oder polycyclisches Ringsystem bilden, welches seinerseits wiederum substituiert sein kann.

2. Verbindung der Formel III,
[PQ¹Q²Q³]⁻ A⁺ (III)
worin
A ein Kation der Gruppe la, IIa, IIIa des Periodensystems der Elemente, ein Carbenium-, Oxonium-, Phosphonium oder Sulfonium-Kation oder eine quatäre Ammonium-Verbindung ist,
Q¹, Q² und Q³ gleich oder verschieden sein und sind ein Liganden-System, das ausgehend von einem Biphenyl-Grundgerüst über die Positionen 2 und 12 an P gebunden ist und der allgemeinen Formel (II) 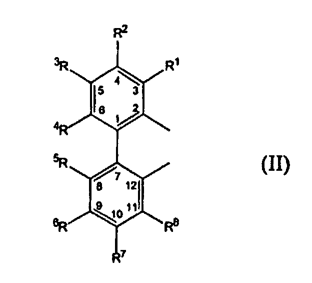
worin
R¹, R², R³, R⁴, R⁵, R⁶, R⁷ und R⁸ gleich oder verschieden sind und ein Halogenatom, eine C₁-C₄₀-kohlenstoffhaltige Gruppe oder eine OSiR₃⁹-Gruppe sind, worin R⁹ gleich oder verschieden sind, ein Wasserstoffatom, ein Halogenatom, eine C₁-C₄₀kohlenstoffhaltige Gruppe sind, oder zwei oder mehrere Reste R¹ bis R⁸ so miteinander verbunden sein kann, daß sie ein mono- oder polycyclisches Ringsystem bilden, welches seinerseits wiederum substituiert sein kann.

3. Verbindung gemäß Anspruch 1 oder 2, **dadurch gekennzeichnet, daß** in der allgemeinen Formel (II) zwei oder mehrere Reste R¹ bis R⁸ so miteinander verbunden sein, daß sie ein mono- oder polycyclisches Ringsystem bilden, welches seinerseits wiederum substituiert sein kann.

4. Verwendung der Verbindungen gemäß einem der Ansprüche 1 bis 3 als Komponente in der Polymerisation von Olefinen.

## Claims

1. A compound of the formula I,
[BQ¹Q²]- A⁺ (I)
where
A is a cation of group Ia, IIa, IIIa of the Periodic Table of the Elements, a carbenium, oxonium, phosphonium or sulfonium cation or a quaternary ammonium compound,
Q¹ and Q² xare identical or different and are a ligand system based on a biphenyl skeleton which is bound to B via the positions 2 and 12 and has the formula (II) 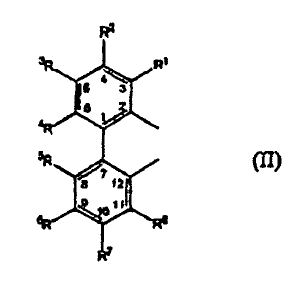
where
R¹, R², R³, R⁴, R⁵, R⁶, R⁷ and R⁸ are identical or different and are each a halogen atom, a C₁-C₄₀ group or an OSiR3⁹ group, where R⁹ are identical or different and are each a hydrogen atom, a halogen atom or a C₁-C₄₀ group, or two or more radicals R¹ to R⁸ may be connected to one another in such a way that they form a monocyclic or polycyclic ring system which may in turn be substituted.

2. A compound of the formula III,
[PQ¹Q²Q³]- A⁺ (III)
where
A is a cation of group Ia, IIa, IIIa of the Periodic Table of the Elements, a carbenium, oxonium, phosphonium or sulfonium cation or a quaternay-ammonium compound,
Q¹, Q² and Q³ are identical or different and are a ligand system based on a biphenyl skeleton which is bound to P via the positions 2 and 12 and has the formula (II) 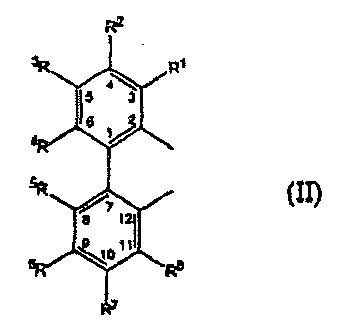
where
R¹, R², R³, R⁴, R⁵, R⁶, R⁷ and R⁸ are identical or different and are each a halogen atom, a C₁-C₄₀ group or an OSiR3⁹ group, where R⁹ are identical or different and are each a hydrogen atom, a halogen atom or a C₁-C₄₀ group, or two or more radicals R¹ to R⁸ may be connected to one another in such a way that they form a monocyclic or polycyclic ring system which may in turn be substituted.

3. A compound as claimed in claim 1 or 2, wherein, in the formula (II), two or more radicals R¹ to R⁸ are connected to one another in such a way that they form a monocyclic or polycyclic ring system which may in turn be substituted.

4. The use of a compound as claimed in any of claims 1 to 3 as a component in the polymerization of olefins.

## Revendications

1. Composé de formule I :
[BQ¹Q²]⁻ A⁺ (I)
dans laquelle :
A est un cation du groupe Ia, IIa, IIIa du Tableau Périodique des Eléments, un cation carbénium, oxonium, phosphonium ou bien sulfonium, ou bien un composé ammonium quaternaire,
Q¹ et Q², identiques ou différents, sont un système ligand à partir d'une structure de base biphényle, et sont fixés en positions 2 et 12 à un B qui répond à la formule générale (II) : 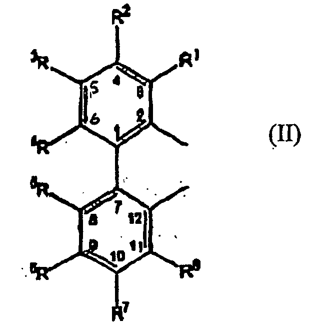
dans laquelle :
R¹, R², R³, R⁴, R⁵, R⁶, R⁷ et R⁸, identiques ou différents, représentent un atome d'halogène, un groupe hydrocarboné en C₁ à C₄₀, ou un groupe OSiR₃⁹, où R⁹, identique ou différent, représente un atome d'hydrogène, un atome d'halogène, un groupe hydrocarboné en C₁ à C₄₀, ou bien deux ou plusieurs restes R¹ à R⁸ sont reliés les uns aux autres de telle façon qu'ils forment un système cyclique mono ou polycyclique qui lui-même peut être substitué.

2. Composé de formule III :
[PQ¹Q²Q³]⁻ A⁺ (III)
dans laquelle :
A est un cation des groupes Ia, IIa, IIIa du Système Périodique des Eléments, un cation carbénium, oxonium, phosphonium ou sulfonium, ou un composé ammonium quaternaire,
Q¹, Q² et Q³, identiques ou différents les uns des autres, représentent un système ligand, qui en partant d'une structure de base biphényle, est fixés en positions 2 et 12 à un B et répond à la formule générale (II) : 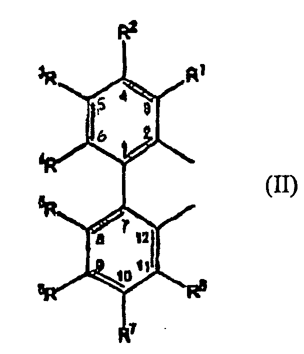
dans laquelle :
R¹, R², R³, R⁴, R⁵, R⁶, R⁷ et R⁸, identiques ou différents, sont un atome d'halogène, un groupe hydrocarboné en C₁ à C₄₀, ou un groupe OSiR₃⁹, où R⁹, identique ou différent, représente un atome d'hydrogène, un atome d'halogène, un groupe hydrocarboné en C₁ à C₄₀, ou bien deux ou plusieurs restes R¹ à R⁸ peuvent être reliés ensemble de telle façon qu'ils forment un système mono ou polycyclique qui lui-même peut être substitué.

3. Composé selon l'une quelconque des revendications 1 ou 2, **caractérisé en ce que** dans la formule générale (II), deux ou plusieurs restes R¹ ou R⁸ sont reliés ensemble de telle façon qu'ils forment un système mono ou polycyclique, qui lui-même peut être substitué.

4. Utilisation des composés selon l'une quelconque des revendications 1 à 3, en tant que composants dans la polymérisation d'oléfine.
